# EUROPEAN PATENT SPECIFICATION

(11) **EP 4 287 466 B1**
(45) Date of publication and mention of the grant of the patent: **28.01.2026**
(21) Application number: 22275074.7
(22) Date of filing: 02.06.2022
(51) Int. Cl.: H02K 3/18, H02K 3/52, H02K 3/28

(54) **CONNECTING WINDINGS OF STATOR ASSEMBLY**
VERBINDUNGSWICKLUNGEN DER STATORBAUGRUPPE
CONNEXION D'ENROULEMENTS D'ENSEMBLE STATOR

(43) Date of publication of application: 06.12.2023
(73) Proprietor: Hamilton Sundstrand Corporation, Charlotte, NC 28217 (US)
(72) Inventor: SAWATA, Tadashi, Coventry, CV3 5BN (GB); PAGE, Andrew, Tring, HP23 4QD (GB)
(74) Representative: Dehns

(56) References cited:
- EP-A1- 3 651 325
- EP-A1- 3 683 940
- EP-A1- 3 817 200
- DE-A1- 10 048 492
- US-A1- 2021 305 870
- US-A1- 2021 359 557

## Description

### TECHNICAL FIELD

The present disclosure is concerned with providing electrical connection of the stator windings of an electric machine.

### BACKGROUND

Electric machines i.e. electric motors or generators include a rotor assembly and a stator assembly. The rotor on which permanent magnets are mounted rotates relative to the stator, having windings, to generate electric power. Such operation and assemblies are well-known and will not be described in further detail here.

The stator assembly includes a plurality of windings made of conductive material (wire). An AC voltage is connected to the windings to generate a magnetic field. Different phases of the AC voltage supply are connected to different ones of the windings around the stator to interact with the magnets on the rotor to cause the rotor to rotate. High performance electric machines may have tens of such windings. In such high performance machines, minimising electrical losses is critical to maximise power density. Maximising power density is particularly important where, for example, space for the motor, or permissible size and/or weight of the motor are limited such as in aircraft or other vehicles.

Outer rotor machines (i.e. where the rotor is located radially outwards of the stator) can provide greater power density than conventional inner rotor machines. Also, losses can be reduced by using multi-strand conductors such as Litz wires for the windings. Litz wires are wires used in various electrical applications for carrying AC current. Litz wires comprise several thin wire strands which are then twisted or woven together to form a multi-strand conductor. Because of the way the strands of the Litz wire are twisted together, each strand is on the outside of the conductor for an equal proportion of the overall length and so the current is equally distributed between the strands which reduces resistance of the strands. Litz wires have reduced losses, due to proximity and skin effect characteristics, particularly at high frequencies. Litz wires with many strands and small diameter are easy to bend and form into motor windings.

The windings need to be electrically connected to the AC voltage supply, with different windings connected to different phases of the AC supply. Different configurations of winding connections are known that are able to create a rotating magnetic field from the stator due to the application of different AC phases to different windings. The rotating field causes rotation of the rotor. Various ways for making the electrical connection between the conductors of the windings and the supply terminals are known including crimping, soldering and welding. US 2020/0227969 discloses making the electrical connection via bus bars, whereby several windings to be connected to each phase can be attached to the same bus bar, via a stud around which the wires of the winding are wrapped and secured. The bus bars can then be arranged in a compact stacked manner around the end of the stator. The bus bar arrangement is particularly advantageous where the windings are formed from multi-strand conductors such as Litz wires. Challenges arise with other forms of connection when the conductors are multi-strand since it is difficult to retain all of the many small strands in a crimp or weld connection or the like. It is also difficult to retain such multi-strand conductors in stator slots, particularly in high vibrational environments or environments in which high temperature excursions are experienced. This last point is particularly an issue with outer rotor machines, since the stator slots are wider and the outer diameter of the stator is greater.

Whilst the use of bus bars to connect windings to the power supply is an improvement over individual winding connections, cooling and assembly of the stack of bus bars at the end of the stator is challenging, and becomes more so as machines become bigger and require more and more bus bars. In particular, a large amount of heat can be generated in the bus bar stack which is difficult to remove and which can cause damage to the machine.

Stator assemblies are disclosed in EP 3 817 200 A1 and EP 3 683 940 A1.

There is, therefore, a need for improved connection of stator windings to power supply terminals.

### SUMMARY

According to the disclosure, there is provided a stator assembly as defined by claim 1.

### BRIEF DESCRIPTION

Examples of the connection arrangement and method according to the disclosure will now be described with reference to the drawings. It should be noted that variations are possible within the scope of the claims.
Figure 1 is an example showing a bus bar connection arrangement of stator coil windings for an outer rotor machine.
Figure 2 is an exploded view of an arrangement showing a bus bar connection arrangement of stator coil windings for an inner rotor machine.
Figure 3 is a schematic view of an arrangement according to the disclosure.
Figure 4 is a schematic view of an alternative arrangement according to the disclosure.

### DETAILED DESCRIPTION

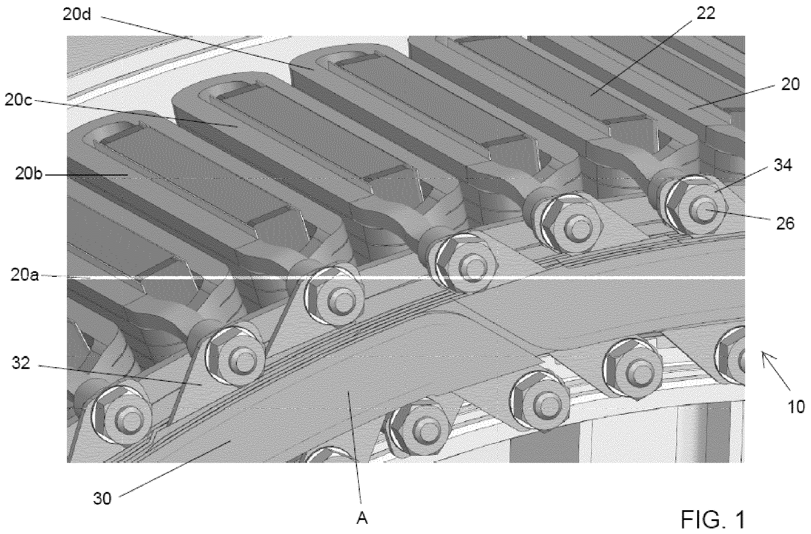

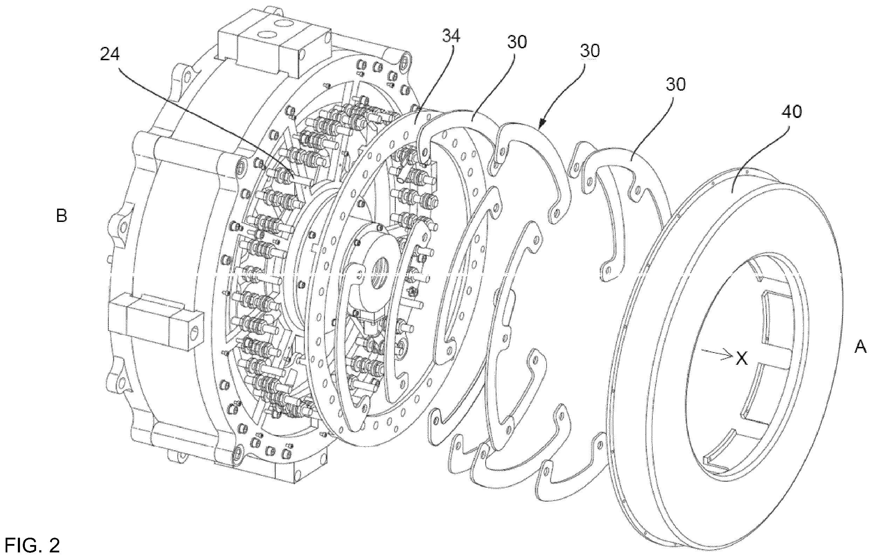

Referring first to Figs. 1 and 2, by way of background, an electric machine and, in particular, a stator assembly and the electrical connection of the windings, will be described.

Figure 1 shows a stator assembly for an outer rotor machine, showing part of the stator assembly and the stator windings. The rotor (not shown) would be positioned radially outward and around the stator 10. The stator has a plurality of windings 20 located around its outer circumference.

The example of Fig. 2 shows the stator assembly of an inner rotor machine. Here, the stator assembly includes a stator housing 100 including a plurality of windings (not shown here) around its inner circumference.

Apart from the location on the stator, the description of the windings 20 is essentially the same for the inner rotor and the outer rotor design.

Although shown as a simple block component in Fig. 1, the windings may be formed of multi-strand conductors e.g. Litz wires. The winding (or coil) will have a start end and a finish end. In the example shown, the two ends of the coil are combined at a conductive pin or stud 24 for ease of electrically connecting the winding to the terminal for AC voltage supply. Each winding may be wound around a core 22 e.g. a winding core forming a winding module. Several winding modules are located around the stator. Each stator module is electrically connected to one phase of an AC voltage supply. For example, a first winding 20a may be connected to a first AC phase, a second winding 20b, adjacent the first, may be connected to a second AC phase, a third winding 20c, adjacent the second, may be connected to the third phase, a fourth winding 20d, adjacent the third may be connected to the first phase, a fifth winding to the second phase, and so on around the stator. Alternative patterns, e.g. where three adjacent windings are connected to the first phase, the next three to the second phase and the next three to the third phase, etc. are also feasible. In the example shown, the pin or stud 24 combining the ends of the windings is connected to the AC voltage by being connected to a respective bus bar 30. Several of the windings to be connected to the first phase may be connected to the same bus bar, another bus bar may connect several windings to the second phase, and so on. Alternatively, each winding may have its own bus bar 30 connected to the respective AC phase. In the example shown in Fig. 1, the bus bars are provided with tabs 32 having a hole therein through which the stud 24 passes and is secured by a nut 34. In other examples, the ends of the coils may be connected to the bus bars in different ways. In yet other arrangements, the windings may be connected to the AC voltage supply using other more conventional connections such as crimping etc. It is also known to wind several coils about one core or to winding one coil around two or more cores. Figs. 1 and 2 are only shown by way of example as known stator winding arrangements.

Where bus bars are used, these are stacked on top of each other, as seen in Fig. 1 around the end of the stator to provide a compact assembly.

The stacking of the bus bars can be better seen in Fig. 2 which shows the stator and stator housing 10 and the plurality of bus bars 30. In this example, due to the build-up of heat in the stack of connecting bus bars, a cooling bar 34 may also be provided between the bus bars and the stator. In an alternative arrangement, cooling may be provided using a coolant, cooling air or some other form of heat sink.

Again as best seen in the example of Fig. 2, but equally so for the assembly of Fig. 1, the connections for the windings, whether they be by bus bars or otherwise, are all provided on one side or face A of the stator. The other side or face - the back of the stator - is indicated by B in the drawings. This is a conventional way of assembling a stator and an electric machine, beginning with the housing or stator ring and then assembling the component parts from the front side A, and then providing a cover 40 or the like over the completed assembly.

Whilst such assemblies and connection techniques are generally fit for purpose, the inventors have noted that keeping the assembly cool, especially for larger, higher power machines, is a challenge. The more connections e.g. bus bars, provided at the stator end for connecting the windings to the power supply, the greater the build-up and concentration of heat. Furthermore, if a faulty connection occurs in the system, particularly at one of the innermost connectors, it is necessary to disassembly the entire connector assembly e.g. all of the bus bars, which can be time and labour intensive.

The solution provided by the present inventors is to provide winding - AC voltage connections on both the front A and the back B sides of the stator. In this way, not all of the connections for all windings, are stacked together on one side of the stator. Various arrangements are possible, but the general concept is that the connections for the windings are shared between the two sides of the stator.

The concept of the disclosure can be applied to inner and outer rotor machines, and for any types of winding including, but not limited to multi-strand windings or Litz wire windings. Although described in relation to examples in which the windings are connected to the AC phase by means of bus bars, other types of connection are also feasible.

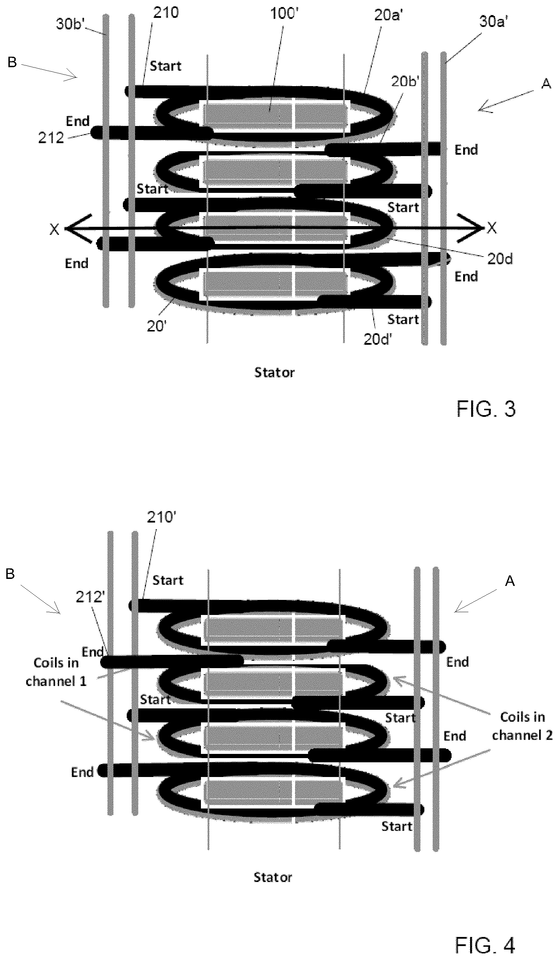

Figure 3 shows one example of the solution of the disclosure. The figure shows the stator 100' having a first, or front side A and a second, or front side B opposite side A with respect to the axis X through the machine. This example shows a motor having multiple channels of coils 20' as is common in high power motors, where different windings 20a' and 20c'; 20b' and 20d', provide different channels. Each winding 20a', 20b', 20c', 20d' has a start end 210 and a finish end 212. Each winding, in this example, has a full number of turns, so that the start end 210 and the finish end 212 are on the same side of the stator (A or B). In this example, alternate windings have their ends on opposite sides of the stator (i.e. winding 20a' has its ends on side B, winding 20b' has its ends on side A, winding 20c' has its ends on side B, winding 20d' has its ends on side A. The ends of the windings 20' are connected to respective phases of the AC voltage supply via conductive connectors - here bus bars 30a', 30b'. In this example, the windings for a first channel 20a', 20c' are connected to bus bars 30b' on side B of the stator 100' and the windings for a second channel 20b', 20d', are connected to bus bars 30a on side A of the stator. On each side A, B, a bus bar is provided for each of the start end and the finish end of the respective windings. The arrangement with the bus bars for the different channels being on different sides of the stator, improves the segregation between the channels. This is particularly important for applications, e.g. aircraft, which require a high degree of safety. If one side of connections fails, only that channel will fail and the healthy channel will continue. This means that, in an aircraft application, the aircraft could continue to fly even if one channel fails.

In another arrangement, as shown in Fig. 4, the windings may be formed to include a half turn so that the start end 210' is on a different side of the stator to the finish end 212' of the winding. With such an arrangement, the respective ends of the windings can be connected to bus bars on different sides of the stator. For example, a bus bar for the start ends of the coils for a first channel can be provided on one side B of the stator and the bus bar (or other connector) for the finish ends of those channels could be on the other side A of the stator. The connector/bus bar for the start end of the second channel windings could then be provided on the side A opposite the side for the start ends of the first channel, and the finish ends of the second channel windings can be connected on the side opposite that of the finish ends of the first channel windings. Such an arrangement can improve the retention of the windings in stator slots, since the coils-/windings are secured at both sides of the stator. This improves resistance to vibration and large excursions in temperature.

Other combinations of windings and winding ends being connected to the AC voltage supply on different sides of the stator are also feasible.

Having connections on both sides of the stator rather than just one, as is conventional, can provide significant advantages in assembly and maintenance of electrical machines by allowing access to both sides of the machine and allowing maintenance of only that side where failure has occurred.

By sharing the connection load between both sides of the stator, the amount of heat generated at the connectors e.g. in the bus bar stack, is considerably reduced and heat dissipation is improved.

## Claims

1. A stator assembly comprising:
an annular stator body (100) around an axis (X), the stator body having a first side and a second side spaced axially from the first side and a stator body surface defined by the first and second sides and extending circumferentially around the axis;
a plurality of conductive windings (20') provided on the stator body surface, each conductive winding extending between the first side and the second side, the conductive windings arranged adjacent each other in the circumferential direction; and
a first set of terminal connectors (30a') provided at the first side, and a second set of terminal connectors (30b') provided at the second side for conductively connecting the windings to a power supply, in use; and
**characterised in that**:
the plurality of conductive windings includes a first set of windings and a second set of windings, wherein the first set of windings are conductively connected only to the first set of terminal connectors and the second set of windings are conductively connected only to the second set of terminal connectors.

2. The assembly of claim 1, wherein the first set of terminal connector and the second set of terminal connectors are bus bars.

3. The assembly of claim 1 or 2, wherein the windings are coils of multi-strand conductors.

4. The assembly of claim 3, wherein the windings are formed of Litz wires.

5. The assembly of any preceding claim, wherein each of the windings has a start end and a finish end and wherein the start end and the finish end are connected to a terminal connector on the same one of the first side and the second side.

6. The assembly of any of claims 1 to 4, wherein each of the windings has a start end and a finish end and wherein the start end and the finish end are connected to a terminal connector on the opposite ones of the first side and the second side.

7. The assembly of any preceding claim, wherein each winding is wound around a core on the stator body surface.

8. The assembly of any preceding claim, wherein the plurality of windings are provided on a radially outer surface of the stator body.

9. The assembly of any of claims 1 to 6, wherein the plurality of windings are provided on a radially inner surface of the stator body.

10. The assembly of any preceding claim, wherein the windings are connected to the respective terminal connectors by means of a nut or fastener.

11. The assembly of claim 2 or any claim dependent thereon, where the first set of terminal connectors are bus bars arranged in a stacked arrangement at the side of the stator, stacked in the axial direction.

12. An electric machine comprising a rotor and a stator assembly as claimed in any preceding claim.

13. The electric machine of claim 12, including an AC voltage supply to which the windings are connected via the terminal connectors.

14. The electric machine of claim 13, wherein different windings are connected to different phases of the AC voltage supply to generate a rotating magnetic field.

## Patentansprüche

1. Statoranordnung, umfassend:
einen ringförmigen Statorkörper (100) um eine Achse (X), wobei der Statorkörper eine erste Seite und eine zweite Seite, die axial von der ersten Seite beabstandet ist, sowie eine Statorkörperoberfläche aufweist, die durch die erste und die zweite Seite definiert ist und sich in Umfangsrichtung um die Achse erstreckt;
eine Vielzahl von leitfähigen Wicklungen (20'), die auf der Statorkörperoberfläche vorgesehen sind, wobei sich jede leitfähige Wicklung zwischen der ersten Seite und der zweiten Seite erstreckt und die leitfähigen Wicklungen in Umfangsrichtung nebeneinander angeordnet sind; und
einen ersten Satz von Anschlussverbindern (30a'), die an der ersten Seite vorgesehen sind, und einen zweiten Satz von Anschlussverbindern (30b') vorgesehen ist, um die Wicklungen bei Gebrauch leitend mit einer Stromversorgung zu verbinden; und
**dadurch gekennzeichnet, dass**:
die mehreren leitfähigen Wicklungen einen ersten Satz von Wicklungen und einen zweiten Satz von Wicklungen umfassen, wobei der erste Satz von Wicklungen nur leitend mit dem ersten Satz von Anschlusskonnektoren verbunden ist und der zweite Satz von Wicklungen nur leitend mit dem zweiten Satz von Anschlusskonnektoren verbunden ist.

2. Die Anordnung nach Anspruch 1, wobei der erste Satz von Anschlussklemmen und der zweite Satz von Anschlussklemmen Sammelschienen sind.

3. Die Anordnung nach Anspruch 1 oder 2, wobei die Wicklungen Spulen aus mehradrigen Leitern sind.

4. Die Anordnung nach Anspruch 3, wobei die Wicklungen aus Litzendrähten gebildet sind.

5. Die Anordnung nach einem der vorstehenden Ansprüche, wobei jede der Wicklungen ein Anfangsende und ein Endende aufweist und wobei das Anfangsende und das Endende mit einem Anschlussklemme auf derselben der ersten Seite und der zweiten Seite verbunden sind.

6. Die Anordnung nach einem der Ansprüche 1 bis 4, wobei jede der Wicklungen ein Anfangsende und ein Endende aufweist und wobei das Anfangsende und das Endende mit einem Anschlussklemme auf der gegenüberliegenden ersten Seite und der zweiten Seite verbunden sind.

7. Die Baugruppe nach einem der vorstehenden Ansprüche, wobei jede Wicklung um einen Kern auf der Oberfläche des Statorkörpers gewickelt ist.

8. Die Baugruppe nach einem der vorstehenden Ansprüche, wobei die mehreren Wicklungen auf einer radial äußeren Oberfläche des Statorkörpers vorgesehen sind.

9. Die Baugruppe nach einem der Ansprüche 1 bis 6, wobei die mehreren Wicklungen auf einer radial inneren Oberfläche des Statorkörpers vorgesehen sind.

10. Die Baugruppe aus jedem vorhergehenden Anspruch, wobei die Wicklungen mittels einer Mutter oder einer Befestigungseinrichtung mit den jeweiligen Anschlussklemmen verbunden sind.

11. Die Anordnung gemäß Anspruch 2 oder einem davon abhängigen Anspruch, wobei der erste Satz von Anschlussstücken Sammelschienen sind, die in einer gestapelten Anordnung an der Seite des Stators in axialer Richtung gestapelt sind.

12. Eine elektrische Maschine, umfassend eine Rotor- und eine Statoranordnung, wie in einem vorhergehenden Anspruch beansprucht.

13. Die elektrische Maschine gemäß Anspruch 12, einschließlich einer Wechselspannungsversorgung, an die die Wicklungen über die Anschlussklemmen angeschlossen sind.

14. Die elektrische Maschine nach Anspruch 13, wobei verschiedene Wicklungen mit verschiedenen Phasen der Wechselspannungsversorgung verbunden sind, um ein rotierendes Magnetfeld zu erzeugen.

## Revendications

1. Ensemble stator comprenant :
un corps de stator annulaire (100) autour d'un axe (X), le corps de stator présentant un premier côté et un second côté espacés axialement du premier côté et une surface de corps de stator définie par les premier et second côtés et se prolongeant circonférentiellement autour de l'axe ;
une pluralité d'enroulements conducteurs (20') prévus sur la surface de corps de stator, chaque enroulement conducteur se prolongeant entre le premier côté et le second côté, les enroulements conducteurs étant prévus côte à côte selon la direction circonférentielle ; et
un premier ensemble de bornes de raccordement (30a') prévu au niveau du premier côté, et un second ensemble de bornes de raccordement (30b') prévu au niveau du second côté pour relier de manière conductrice les enroulements à une source d'alimentation électrique, en service ; et
**caractérisé en ce que** :
la pluralité d'enroulements conducteurs comportent un premier ensemble d'enroulements et un second ensemble d'enroulements, dans lequel le premier ensemble d'enroulements est raccordé de manière conductrice uniquement au premier ensemble de bornes de raccordement et le second ensemble d'enroulements est raccordé de manière conductrice uniquement au second ensemble de bornes de raccordement.

2. Ensemble selon la revendication 1, dans lequel le premier ensemble de bornes de raccordement et le second ensemble de bornes de raccordement sont des barres omnibus.

3. Ensemble selon la revendication 1 ou 2, dans lequel les enroulements sont des bobines de conducteurs multibrins.

4. Ensemble selon la revendication 3, dans lequel les enroulements sont constitués de fils de Litz.

5. Ensemble selon une quelconque revendication précédente, dans lequel chaque enroulement présente une extrémité de départ et une extrémité de fin et dans lequel l'extrémité de départ et l'extrémité de fin sont raccordées à une borne de raccordement sur le même côté du premier côté et du second côté.

6. Ensemble selon l'une quelconque des revendications 1 à 4, dans lequel chaque enroulement présente une extrémité de départ et une extrémité de fin et dans lequel l'extrémité de départ et l'extrémité de fin sont raccordées à une borne de raccordement sur les côtés opposés du premier côté et du second côté.

7. Ensemble selon une quelconque revendication précédente, dans lequel chaque enroulement est enroulé autour d'un noyau sur la surface de corps de stator.

8. Ensemble selon une quelconque revendication précédente, dans lequel la pluralité d'enroulements sont prévus sur une surface externe radiale du corps de stator.

9. Ensemble selon l'une quelconque des revendications 1 à 6, dans lequel la pluralité d'enroulements sont prévus sur une surface interne radiale du corps de stator.

10. Ensemble selon une quelconque revendication précédente, dans lequel les enroulements sont raccordés aux bornes de raccordement respectives au moyen d'un écrou ou d'une fixation.

11. Ensemble selon la revendication 2 ou une quelconque revendication qui dépend de celle-ci, où le premier ensemble de bornes de raccordement est constitué de barres omnibus agencées en empilement au niveau du côté du stator, empilées selon la direction axiale.

12. Machine électrique comprenant un rotor et un ensemble stator selon l'une quelconque des revendications précédentes.

13. Machine électrique selon la revendication 12, comportant une source de tension CA à laquelle les enroulements sont raccordés par le biais des bornes de raccordement.

14. Machine électrique selon la revendication 13, dans laquelle différents enroulements sont raccordés à différentes phases de la source de tension CA pour générer un champ magnétique tournant.
